(19) **Europäisches Patentamt / European Patent Office / Office européen des brevets**

(11) **EP 4 359 276 B1**

(12) **FASCICULE DE BREVET EUROPEEN**

(45) Date de publication et mention de la délivrance du brevet:
**25.02.2026 Bulletin 2026/09**

(21) Numéro de dépôt: **22735506.2**

(22) Date de dépôt: **21.04.2022**

(51) Classification Internationale des Brevets (IPC):
**B60W 30/14** *(2006.01)* **B60W 50/00** *(2006.01)*

(52) Classification Coopérative des Brevets (CPC):
**B60W 30/143;** B60W 2050/0013; B60W 2050/0031; B60W 2050/0039; B60W 2520/10; B60W 2520/105; B60W 2530/10; B60W 2552/15; B60W 2555/60; B60W 2720/103

(86) Numéro de dépôt international:
**PCT/FR2022/050755**

(87) Numéro de publication internationale:
**WO 2022/269147 (29.12.2022 Gazette 2022/52)**

(54) **SYSTÈME METTANT EN OEUVRE DES CALCULS POUR DÉTERMINER UNE TRAJECTOIRE EN MINIMISANT LA CONSOMMATION D'ÉNERGIE D'UN VÉHICULE AUTOMOBILE**

SYSTEM ZUR DURCHFÜHRUNG VON BERECHNUNGEN ZUR BESTIMMUNG EINER TRAJEKTORIE BEI MINIMIERUNG DES ENERGIEVERBRAUCHS EINES KRAFTFAHRZEUGS

SYSTEM PERFORMING CALCULATIONS TO DETERMINE A TRAJECTORY WHILE MINIMIZING THE ENERGY CONSUMPTION OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2021 FR 2106569**

(43) Date de publication de la demande:
**01.05.2024 Bulletin 2024/18**

(73) Titulaires:
• **Stellantis Auto SAS**
  **78300 Poissy (FR)**
• **Universite Orleans**
  **45067 Orleans cedex 2 (FR)**

(72) Inventeurs:
• **SIMON, Antoine**
  **78540 VERNOUILLET (FR)**
• **NOUILLANT, Cedric**
  **78220 VIROFLAY (FR)**
• **WULF RIBELLES, Luis Alfredo**
  **45100 ORLEANS (FR)**
• **GILLET, Kristan**
  **45000 Orléans (FR)**

• **COLIN, Guillaume**
  **45160 OLIVET (FR)**
• **CHAMAILLARD, Yann**
  **45130 LE BARDON (FR)**

(74) Mandataire: **PSIP**
  **Stellantis Auto SAS**
  **Service REIP - YT800**
  **43, rue Jean Pierre Timbaud**
  **78300 Poissy (FR)**

(56) Documents cités:
**WO-A1-2011/025443 FR-A1- 3 068 322**

• **SCIARRETTA ANTONIO ET AL: "Optimal Ecodriving Control: Energy-Efficient Driving of Road Vehicles as an Optimal Control Problem", IEEE CONTROL SYSTEMS, IEEE, USA, vol. 35, no. 5, 1 October 2015 (2015-10-01), pages 71 - 90, XP011669319, ISSN: 1066-033X, [retrieved on 20150914], DOI: 10.1109/MCS.2015.2449688**

**(Cont. page suivante)**

• KHALIK Z ET AL: "Vehicle Energy Management with Ecodriving: A Sequential Quadratic Programming Approach with Dual Decomposition", 2018 ANNUAL AMERICAN CONTROL CONFERENCE (ACC), AACC, 27 June 2018 (2018-06-27), pages 4002 - 4007, XP033384367, DOI: 10.23919/ACC.2018.8431544

**Description**

L'invention concerne un système mettant en œuvre des calculs pour déterminer une trajectoire de vitesse de véhicule en minimisant la consommation énergétique du véhicule pour un même temps de trajet. Le système est adapté pour des véhicules électriques ou hybrides.

De nombreux conseils et formation de conduite économique (généralement appelée « éco-conduite ») sont partagés pour limiter la consommation énergétique de véhicules. Cependant, ces conseils ne garantissent pas la baisse effective de la consommation pour un itinéraire donné en considérant un temps de trajet donné et une trajectoire de vitesse initiale donnée.

Une méthode de calculs permettant de garantir une trajectoire d'éco-conduite, c'est-à-dire une trajectoire de vitesse minimisant la consommation énergétique pour le même temps de trajet que la trajectoire de vitesse initiale a été développée précédemment. Elle consiste à utiliser un algorithme de programmation dynamique pour calculer la trajectoire optimale de vitesse en considérant :

- une fonction coût (dépense énergétique) : la consommation du véhicule ;
- la dynamique du système : la vitesse du véhicule ;
- les multiples contraintes du problème : le temps de trajet, les vitesses règlementaires et les accélérations maximales du véhicule.

Pour calculer cette trajectoire de vitesse optimale, la programmation dynamique s'appuie sur le calcul de chaque sous-trajectoire de vitesse optimale. En effet, de manière récursive, pour un tronçon de distance donné et à chaque vitesse initiale, toutes les variations de vitesse possibles sont évaluées (selon la fonction coût) et la meilleure variation est conservée pour chaque vitesse initiale. Le tronçon de distance suivant s'appuie alors sur les précédents résultats pour construire la suite des trajectoires optimales.

Malheureusement, cette méthodologie ne peut avoir un bon niveau d'optimalité qu'à condition d'avoir une bonne discrétisation des pas de vitesse du véhicule et de distance parcourue.

En outre, cette méthode possède comme défaut un temps de calculs important (plusieurs minutes), une puissance de calculs et une taille mémoire élevées puisque toutes les éventualités sont calculées. En conséquence, une application embarquée et en temps-réel de cet algorithme n'est pas envisageable.

En outre, l'état de la technique est connu du document « Optimal Ecodriving Control : Energy-Efficient Driving of Road Vehicles as an Optimal Control Problem », IEEE Control System, USA, vol.35, n°5, 1 octobre 2015, pages 71-90, ISSN 1066-033X ainsi que du document FR3068322A1.

Pour pallier les défauts de l'art antérieur, l'invention propose un système mettant en œuvre des calculs pour déterminer une trajectoire en minimisant la consommation d'énergie d'un véhicule automobile, le système comprenant :

- un module de modèles de dynamique et de consommation énergétique configuré pour définir des paramètres de roulage,
- un module d'optimisation configuré pour définir des contraintes de roulage en fonction des paramètres de roulage,
- un module de détermination de trajectoire par calculs selon un principe du minimum de Pontryagin minimisant une fonction dite Hamiltonien desdits paramètres de roulage,
- le modèle de dynamique étant défini selon les équations :

$$\dot{s}(t) = v(t) \tag{1}$$

$$\dot{v}(t) = u(t) - c_0 \tag{6}$$

où

$s$ est la position du véhicule (en m) ;
$v$ est la vitesse du véhicule (en m/s) ;
$t$ est le temps (en s) ;
$c_0 = \underline{a}_0/m$ ;
$\underline{a}_0 = \overline{a} + m \, g \sin(\theta(s))$ est la résistance au roulage et à la pente (en N) ;
$\overline{a}$ est la résistance au roulage à vitesse nulle (en N) ;
m est la masse du véhicule en kg ;
$\theta$ est la pente de la route (en rad) ;
u est la commande d'accélération (en m/s$^2$) le modèle de consommation énergétique étant défini par l'équation :

$$P_b(t) = P_m(t) + P_{aux}\,. \tag{8}$$

où

$P_b$ est la puissance tirée de la batterie (en W) ;

$P_{aux}$ est la puissance consommée par les auxiliaires (en W) ;

$P_m$ est la puissance électrique consommée par la machine (en W) tel que :

$$P_m(u,v) = b_1\,v(t) + b_2\,u(t)\,v(t) + b_3\,u(t) \tag{9}$$

où

$b_1$ représente les pertes par friction (en W/(m/s)) ;

$b_2$ représente la puissance mécanique équivalente (en W/(m$^2$/s3)) ;

$b_3$ représente les pertes ohmiques (en W/(m/s$^2$)),

- le module d'optimisation étant configuré pour résoudre les équations suivantes :

$$\min_{\{u(t),s(t),v(t),t_f\}} \int_{t_0}^{t_f} (L(u,v) + \beta)\,dt \tag{10}$$

selon

$$\dot{s}(t) = v(t) \tag{11}$$

$$\dot{v}(t) = u(t) - c_0 \tag{12}$$

$$s(t_0) = s_0 \tag{13}$$

$$s(t_f) = s_f \tag{14}$$

$$v(t_0) = v_0 \tag{15}$$

$$v(t_f) = v_f \tag{16}$$

$$v_{min} \leq v(t) \leq v_{max} \tag{17}$$

$$-u_{min} \leq u(t) \leq u_{max} \tag{18}$$

où

$L$ est la consommation énergétique instantanée du véhicule (en W) ;

$\beta$ est la pénalité priorisant la durée du trajet sur le gain énergétique ;

$s_0$, $s_f$ sont les contraintes de position initiale et finale ;

$v_0$, $v_f$ sont les contraintes de vitesse initiale et finale ;

$v_{min}$, $v_{max}$ sont les contraintes de vitesse minimale et maximale ;

$u_{min}$, $u_{max}$ sont les contraintes d'accélération minimale et maximale.

- le module de détermination étant configuré pour minimiser la fonction dite Hamiltonien :

$$\mathcal{H} = \tilde{L}(u) + \beta + \lambda_s\,v + \lambda_v(u - c_0) \tag{19}$$

où

$\lambda_s$, et $\lambda_v$ sont des variations de co-états pondérant chaque dynamique, $\tilde{L}(u)$ correspond à l'énergie qu'il est possible d'économiser sur le trajet

$$\tilde{L}(u) = b_3 \, (u(t) - c_0)^2 + b_3 c_0{}^2 \qquad (22)$$

les variations de co-états pondérant chaque dynamique, étant calculées de la manière suivante :

$$\dot{\lambda}_s = -\frac{d\mathcal{H}}{ds} = 0 \qquad (23)$$

et

$$\dot{\lambda}_v = -\frac{d\mathcal{H}}{dv} = -\lambda_s \qquad (24)$$

la commande d'accélération optimale non contrainte étant de préférence alors déduite :

$$\frac{d\mathcal{H}}{du} = 2 \, b_3(u - c_0) + \lambda_v = 0 \rightarrow u^* = -\frac{\lambda_v}{2 \, b_3} + c_0 \qquad (25)$$

et/ou la commande d'accélération optimale contrainte étant de préférence alors déduite :

$$u(t)^* = \begin{cases} u_{max}, & if \ u(t)^* \geq u_{max} \\ -\dfrac{\lambda_v}{2 \, b_3} + c_0, & if \ -u_{min} < u(t)^* < u_{max} \\ -u_{min}, & if \ u(t)^* \leq -u_{min} \end{cases} \qquad (26)$$

avec au final, le système d'équation décrit est défini selon :

$$\dot{x} = H \, x(t) \qquad (27)$$

$$x = \{s, v, 1, \lambda_s, \lambda_v, 0\} \qquad (28)$$

Dans le cadre de l'invention, le terme « module » s'entend comme un ensemble d'éléments matériels et d'instructions de code de programme pour effectuer une action donnée, notamment un calcul.

L'invention proposée est une solution analytique du problème de l'éco-conduite par le principe du minimum de Pontryagin. Cette solution s'appuie sur une expression particulière du problème de l'éco-conduite compatible avec une résolution rapide et à faible erreur par le principe du Minimum de Pontryagin. Au final, cette solution permet d'embarquer dans un véhicule ou une application mobile, le calcul d'une trajectoire d'éco-conduite.

Contrairement à la solution existante, l'invention permet d'embarquer ce type d'algorithme dans un calculateur automobile ou bien dans un téléphone mobile. Pour cela, deux problèmes sont résolus de concert :

- réduire significativement la puissance de calculs, le temps de calculs et de mémoire nécessaire pour obtenir une trajectoire d'éco-conduite ; et
- conserver une optimalité proche du calcul par programmation dynamique en respectant la contrainte de fin de temps de parcours tout en proposant une réduction de consommation par rapport au cycle original (non optimisé).

Cela permet de déterminer la dynamique du véhicule sur la base de paramètres accessibles à un système de gestion de batterie d'un véhicule correspondant.

Cela permet d'avoir une optimisation théorique du trajet.

Cela permet d'avoir une détermination du trajet avec des calculs simplifiés limitant le temps de calculs de processeur.

Selon une variante, le système comprend en outre un module de calculs de vitesse moyenne sur un horizon tenant compte d'informations de vitesses limites, des obstacles, de trafic en fonction de la distance, de préférence avec une marge sur cette vitesse.

Cela permet d'avoir des calculs précis des paramètres du trajet, notamment le temps de trajet.

Selon une variante, le système comprend en outre un module de calculs de pénalité ayant un impact sur la vitesse moyenne suivant l'équation

$$WtD_c = a_0 + a_1\bar{v} + a_2\bar{v}^2 + \frac{\beta}{\bar{v}} \qquad (29)$$

avec $\bar{v} = \bar{v}_{ref} + \varepsilon$

où,

$WtD_c$ est la consommation kilométrique moyenne

$\bar{v}_{ref}$ est la vitesse moyenne du cycle original de conduite (en m/s)

$\varepsilon$ est un paramètre à calibrer afin d'atteindre le temps de trajet souhaité (en m/s),

$a_0$ est la résistance au roulage et la pente (en N),

$a_1$ est la résistance au roulage (en N/(m/s)),

$a_2$ est la résistance aérodynamique (en N/(m²/s²))

Cela permet de limiter les erreurs de calculs de paramètres de trajet, notamment le temps de trajet.

Selon une variante, le système comprend en outre un module de calculs de vitesse de croisière optimale suivant l'équation

$$v_{opt,c} = \arg\min_{\tilde{v}} \left( \frac{P_{EM}(\tilde{\omega}, \tilde{T}) + \beta\, z}{\tilde{v}} \right) \qquad (31)$$

où,

$\tilde{\omega}, \tilde{T}$ est le régime et le couple de machine électrique associé à la vitesse $\tilde{v}$ (en rad/s et N/m) ;

$\tilde{v}$ est la fenêtre de vitesse utilisée pour la recherche de $v_{opt,c}$ (en m/s) ;

$z$ est le facteur d'échelle associant la pénalité de temps à la vitesse constante optimale.

Selon une variante, le système comprend en outre au moins un module d'adaptation à plusieurs tronçons configuré pour adapter les calculs à plusieurs tronçons successifs où au moins un paramètre de roulage est sensiblement constant, pour associer chaque tronçon à un des modes de conduite suivant:

- accélération maximale,
- accélération partielle,
- vitesse constante,
- décélération maximale ;
  pour catégoriser l'enchaînement des modes de conduite en
- enchaînement d'accélération : optionnellement accélération maximale, puis accélération partielle, puis optionnellement vitesse constante ;
- enchaînement de décélération : optionnellement vitesse constante, puis accélération partielle, puis optionnellement décélération maximale ;
- enchaînement de conduite économique : optionnellement accélération maximale, puis accélération partielle, puis optionnellement décélération maximale ; ou optionnellement accélération maximale, puis accélération partielle, puis vitesse constante, puis accélération partielle, puis optionnellement décélération maximale.

Selon une variante, l'enchaînement de conduite économique comporte les modes de conduite accélération maximale, puis accélération partielle, puis vitesse constante, puis accélération partielle, puis optionnellement décélération maximale, et la solution au système Hamiltonien linéaire à temps variable est la suivante :

$$x(t_f) = e^{H_d(t_f - t_d)} e^{H_p(t_d - t_c)} e^{H_c(t_c - t_b)} e^{H_p(t_b - t_a)} e^{H_a(t_a)} x(t_0) \qquad (32)$$

permettant d'obtenir un profil de vitesse optimisé de manière analytique où $v_{max} = v_{opt,c}$ suivant l'équation

$$
v(t)^* = \begin{cases}
(-c_0 + u_{max})t + v_0, & if\ t \in [0, t_a) \\
\dfrac{\lambda_{s,0}}{4\,b_3}t^2 - \dfrac{\lambda_{v,0}}{2\,b_3}t + \tilde{v}_a, & if\ t \in [t_a, t_b) \\
v_{max}, & if\ t \in [t_b, t_c) \\
\dfrac{\lambda_{s,0}}{4\,b_3}t^2 + \dfrac{\lambda_{s,0}(t_a - t_b) - \lambda_{v,0}}{2\,b_3}t + \tilde{v}_c, & if\ t \in [t_c, t_d) \\
(-c_0 - u_{min})t + \tilde{v}_d, & if\ t \in [t_d, t_f)
\end{cases}
\tag{33}
$$

où les vitesses initiales sont explicitement définies par :

$$
\tilde{v}_a = v_0 + t_a(-c_0 + u_{max}) + \frac{\lambda_{v,0}t_a}{2\,b_3} - \frac{\lambda_{s,0}{t_a}^2}{4\,b_3}
\tag{34}
$$

$$
\tilde{v}_c = v_{max} + \frac{\lambda_{v,0}t_c}{2\,b_3} + \frac{\lambda_{s,0}t_c(t_c - 2t_b)}{4\,b_3}
\tag{35}
$$

$$
\tilde{v}_d = \tilde{v}_c + t_d(c_0 + u_{min}) + \frac{\lambda_{v,0}t_d}{2\,b_3} + \frac{\lambda_{s,0}t_d(t_d - 2(t_c + t_b))}{4\,b_3}
\tag{36}
$$

et les co-états et temps de commutations sont :

$$
\lambda_{s,0} = -\frac{b_3 c_0^2 + \beta}{v_{max}}
\tag{37}
$$

$$
\lambda_{v,0} = -\frac{\lambda_{s,0}(v_{max} - v_0) - b_3(c_0 - u_{max})^2}{(c_0 - u_{max})}
\tag{38}
$$

$$
t_a = -\frac{\lambda_{s,0}(v_{max} - v_0) + b_3(c_0 - u_{max})^2}{\lambda_{s,0}\,(c_0 - u_{max})}
\tag{39}
$$

$$
t_b = -\frac{\lambda_{s,0}(v_{max} - v_0) - b_3(c_0 - u_{max})^2}{\lambda_{s,0}\,(c_0 - u_{max})}
\tag{40}
$$

$$
t_c = \frac{\lambda_{s,0}\big(v_f - v_{max} + t_f(c_0 + u_{min})\big) + b_3(c_0 + u_{min})^2}{\lambda_{s,0}\,(c_0 + u_{min})}
\tag{41}
$$

$$
t_d = \frac{\lambda_{s,0}\big(v_f - v_{max} + t_f(c_0 + u_{min})\big) - b_3(c_0 + u_{min})^2}{\lambda_{s,0}\,(c_0 + u_{min})}
\tag{42}
$$

$$
t_f = -\frac{\psi}{6\,v_{max}(c_0 + u_{min})(b_3 c_0^2 + \beta)^2\,(c_0 - u_{max})}
\tag{43}
$$

$$\psi = \Big( (u_{\min} + u_{\max})\,(3\,\beta^2 + 6\,b_3\,\beta\,c_0{}^2)$$
$$+ b_3{}^2\,(c_0{}^2\,(-4\,u_{\min}{}^3 + 6\,u_{\min}{}^2\,u_{\max} + 6\,u_{\min}\,u_{\max}{}^2$$
$$- 4\,u_{\max}{}^3)$$
$$- c_0\,(u_{\min}{}^4 - 4\,u_{\min}{}^3\,u_{\max} + 4\,u_{\min}\,u_{\max}{}^3 - u_{\max}{}^4)$$
$$- 6\,c_0{}^3\,(u_{\min}{}^2 - u_{\max}{}^2) + u_{\min}\,u_{\max}{}^4$$
$$+ u_{\min}{}^4\,u_{\max})\Big)\,v_{\max}{}^2 \tag{44}$$
$$- 6\,(b_3\,c_0{}^2 + \beta)^2\,\Big(u_{\max}\,v_f + u_{\min}\,v_0 - c_0\,(v_f - v_0)\Big)\,v_{\max}$$
$$- (b_3\,c_0{}^2 + \beta)^2\,\Big(3\,c_0\,(v_f{}^2 - v_0{}^2) + 6\,c_0{}^2\,s_f$$
$$- u_{\max}\,(3\,v_f{}^2 + 6\,c_0\,s_f) + u_{\min}\,(6\,c_0\,s_f - 3\,v_0{}^2)$$
$$- 6\,s_f\,u_{\min}\,u_{\max}\Big)$$

Cela permet de préciser davantage les calculs des paramètres du trajet, notamment le temps de trajet.

L'invention concerne également un véhicule automobile comprenant un système selon l'invention ou un produit-programme d'ordinateur selon l'invention.

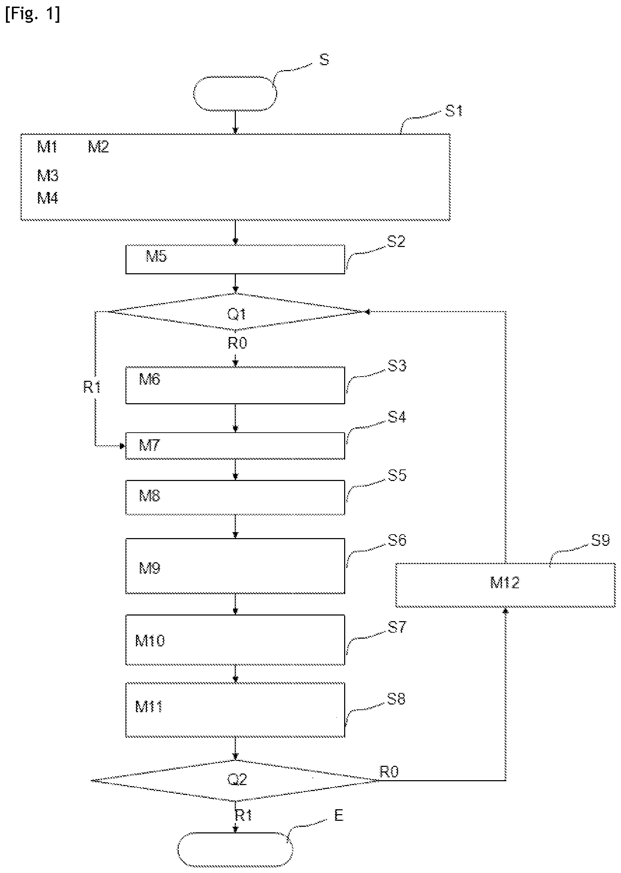

L'invention sera davantage détaillée par la description de modes de réalisation non limitatifs, et sur la base de la [Fig.1] annexée illustrant une méthode de mise en œuvre d'un système selon l'invention.

L'invention concerne une solution analytique du problème de l'éco-conduite par le principe du minimum de Pontryagin. Cette solution s'appuie sur une expression particulière du problème de l'éco-conduite compatible avec une résolution rapide et à faible erreur par le principe du Minimum de Pontryagin. Au final, cette solution permet d'embarquer dans un véhicule ou une application mobile, le calcul d'une trajectoire d'éco-conduite.

Plus précisément, l'invention propose un système mis en œuvre par ordinateur, pour déterminer une trajectoire en minimisant la consommation d'énergie d'un véhicule automobile.

Le système comprend :

- un module de modèles de dynamique M1 et de consommation énergétique M2 configuré pour définir des paramètres de roulage, en particulier dans une étape S1 de définition de paramètres de roulage tels que des accélérations maximales et minimales, et vitesse maximale, et autres paramètres de ce type ;
- un module d'optimisation M3 configuré pour définir des contraintes de roulage telles que des vitesses limites, des obstacles, des feux, des zones d'arrêts (ou stops) selon la distance à parcourir, en fonction desdits paramètres de roulage.

Par ailleurs, le système se caractérise par

- un module de détermination de trajectoire M4 par calculs selon un principe du minimum de Pontryagin minimisant une fonction dite Hamiltonien desdits paramètres de roulage, avec en particulier un objectif de temps de trajets sur un horizon.

Contrairement à l'art antérieur, l'invention permet d'embarquer ce type d'algorithme dans un calculateur automobile ou bien dans un téléphone mobile. Pour cela, deux problèmes sont résolus de concert :

- réduire significativement la puissance de calculs, le temps de calculs et de mémoire nécessaire pour obtenir une trajectoire d'éco-conduite ; et
- conserver une optimalité proche du calcul par programmation dynamique en respectant la contrainte de fin de temps de parcours tout en proposant une réduction de consommation par rapport au cycle original (non optimisé).

Pour pouvoir obtenir une méthode de calculs compatible en optimalité et temps de calculs, la solution analytique consiste, selon la variante préférée, à décrire mathématiquement le problème afin qu'il soit compatible d'une résolution rapide à l'aide du principe du minimum de Pontryagin :

- Les modèles de la dynamique du véhicule et de sa consommation énergétique sont simplifiés tout en limitant la perte en précision par rapport aux modèles utilisés dans la programmation dynamique.

- La méthode d'optimisation n'est plus la programmation dynamique mais le principe du minimum de Pontryagin. Ce principe minimise une fonction, l'Hamiltonien, qui contient le coût (ici la consommation instantanée du véhicule), les dynamiques pondérées de vitesse et d'accélération, et une pénalité sur le temps de parcours. L'optimisation d'un tronçon est alors plus rapide puisqu'elle consiste à résoudre un problème aux deux bouts (Two Points Boundary Value Problem).
- Dans la variante préférée, chaque Hamiltonien est exprimé de telle manière à résoudre un problème d'optimisation par tronçon tout en prenant en compte les états finaux du tronçon précédent comme les états initiaux du tronçon suivant. L'assemblage de ces Hamiltoniens permet alors d'obtenir un système linéaire, à temps variable et à dynamiques constantes par morceau.

Les avantages techniques de cette invention, selon la variante préférée, sont :

- une baisse significative du temps de calculs par rapport à la programmation dynamique : divisé par 2500 en moyenne ;
- le point précédent induit une baisse significative de la puissance de calculs et de la taille mémoire nécessaire à la réalisation du calcul. Ainsi, il est envisageable d'embarquer cette solution dans un véhicule ;
- une optimalité conservée par rapport à la programmation dynamique : en moyenne 12% de perte d'optimalité. Le gain en consommation d'énergie reste significatif par rapport aux cycles de conduite qui ne bénéficient pas de l'éco-conduite : en moyenne 17%.

La description de l'invention peut prendre pour une hypothèse une route plate. L'impact de la pente aura pour effet de modifier l'expression de l'Hamiltonien tout comme l'introduction d'une décélération en roue libre (coasting). De plus, l'invention traitera de la solution analytique pleinement contrainte en accélération et en vitesse.

La solution proposée est embarquable en temps-réel ce qui permet de l'appliquer sur un véhicule avec les ressources calculateur proche de ceux déjà à disposition.

Les solutions de l'art antérieur sur la diminution de la consommation énergétique (mode éco, formation éco-conduite) actuellement proposées reposent en général sur une baisse de la vitesse moyenne de roulage et donc avec un retard par rapport au temps de trajet initial. L'invention permet de minimiser la consommation énergétique pour une vitesse moyenne donnée afin de garantir un temps d'arrivée à l'utilisateur.

Selon l'invention le modèle de dynamique du véhicule est défini selon la seconde loi de Newton :

$$\dot{s}(t) = v(t) \qquad (1)$$

$$\dot{v}(t) = \frac{1}{m}\big(F_t(t) - F_r(t)\big) \qquad (2)$$

où

$s$ est la position du véhicule (en m) ;
$v$ est la vitesse du véhicule (en m/s) ;
$t$ est le temps (en s) ;
$m$ est la masse totale du véhicule incluant l'inertie des parties rotatives (en kg) ;
la force résistant au mouvement du véhicule étant :

$$F_r(t) = a_0 + a_1\, v(t) + a_2\, v(t)^2 \qquad (3)$$

où

$a_0 = \overline{a} + m\, g \sin(\theta(s))$ est la résistance au roulage et à la pente (en N) ;
$\overline{a}$ est la résistance au roulage à vitesse nulle (en N) ;
$a_1$ est la résistance au roulage (en N/(m/s)) ;
$g$ est l'accélération dûe à la gravité terrestre (en m/s$^2$) ;
$\theta$ est la pente de la route (en rad) ;
$a_2$ est la résistance aérodynamique (en N/(m$^2$/s$^2$))
la force de traction étant :

$$F_t(t) = \frac{\eta_t R_t \, T(t)}{r_{tire}} \qquad (4)$$

où

$\eta_t$ est l'efficacité de la transmission ;

$R_t$ est le rapport de vitesse de la transmission ;

$T$ est le couple de la machine électrique du véhicule (en Nm) ;

$r_{tire}$ est le rayon de la roue (en m).

la vitesse du véhicule peut être déduite du régime de la machine électrique ($\omega$ en rad/s) :

$$v(t) = \frac{\omega(t) r_{tire}}{R_t} \qquad (5)$$

Pour pouvoir résoudre le problème de l'éco-conduite de manière analytique, la dynamique du véhicule est simplifiée de la manière suivante :

$$\dot{v}(t) = u(t) - c_0 \qquad (6)$$

où

$c_0 = a_0/m$ ;

$a_0 = \bar{a} + m \, g \sin(\theta(s))$ est la résistance au roulage et à la pente (en N) ;

$\theta$ est la pente de la route (en rad) ;

$u$ est la commande d'accélération (en m/s$^2$) tel que :

$$u(t) = \frac{\eta_t R_t \, T(t)}{m \, r_{tire}}. \qquad (7)$$

le modèle de consommation énergétique est également adapté par simplification :

$$P_b(t) = P_m(t) + P_{aux}. \qquad (8)$$

où

$P_b$ est la puissance tirée de la batterie (en W) ;

$P_{aux}$ est la puissance consommée par les auxiliaires (en W) ;

$P_m$ est la puissance électrique consommée par la machine (en W) tel que :

$$P_m(u, v) = b_1 \, v(t) + b_2 \, u(t) \, v(t) + b_3 \, u(t) \qquad (9)$$

où

$b_1$ représente les pertes par friction (en W/(m/s)) ;

$b_2$ représente la puissance mécanique équivalente (en W/(m$^2$/s3)) ;

$b_3$ représente les pertes ohmiques (en W/(m/s$^2$)).

En outre, le module d'optimisation M3 est configuré pour résoudre les équations suivantes :

$$\min_{\{u(t), s(t), v(t), t_f\}} \int_{t_0}^{t_f} (L(u, v) + \beta) \, dt \qquad (10)$$

selon

$$\dot{s}(t) = v(t) \qquad (11)$$

$$\dot{v}(t) = u(t) - c_0 \tag{12}$$

$$s(t_0) = s_0 \tag{13}$$

$$s(t_f) = s_f \tag{14}$$

$$v(t_0) = v_0 \tag{15}$$

$$v(t_f) = v_f \tag{16}$$

$$v_{min} \leq v(t) \leq v_{max} \tag{17}$$

$$-u_{min} \leq u(t) \leq u_{max} \tag{18}$$

où

$L$ est la consommation énergétique instantanée du véhicule (en W) ;
$\beta$ est la pénalité priorisant la durée du trajet sur le gain énergétique ;
$s_0$, $s_f$ sont les contraintes de position initiale et finale ;
$v_0$, $v_f$ sont les contraintes de vitesse initiale et finale ;
$v_{min}$, $v_{max}$ sont les contraintes de vitesse minimale et maximale ;
$u_{min}$, $u_{max}$ sont les contraintes d'accélération minimale et maximale.

Le paramètre $\beta$ peut être une pénalité obtenue selon l'art antérieur, mais est de préférence calculé suivant une variante préférée détaillée ci-dessous.

La pénalité β est utilisée pour influencer le temps de trajet. Ce paramètre a montré par le passé qu'il pouvait être complexe à calibrer. La solution proposée ici permet de faciliter sa calibration car elle pose la relation entre l'impact de β sur la vitesse moyenne du cycle et la dépense énergétique moyenne.

Ainsi, le système comprend de préférence en outre un module de calculs de pénalité M7 ayant un impact sur la vitesse moyenne suivant l'équation

$$WtD_c = a_0 + a_1\bar{v} + a_2\bar{v}^2 + \frac{\beta}{\bar{v}} \tag{29}$$

avec $\bar{v} = \bar{v}_{ref} + \varepsilon$
où,
$WtD_c$ est la consommation kilométrique moyenne,

Pour rappel, $a_0$ est la résistance au roulage et la pente (en N), $a_1$ est la résistance au roulage (en N/(m/s)), $a_2$ est la résistance aérodynamique (en N/(m$^2$/s$^2$)),

$\bar{v}_{ref}$ est la vitesse moyenne du cycle original de conduite (en m/s)
$\varepsilon$ est un paramètre à calibrer afin d'atteindre le temps de trajet souhaité (en m/s)

Par conséquent, dans le cas où la consommation kilométrique moyenne est minimisée, le minimum de $WtD_c$ permet de déduire une loi de $\beta$ selon la vitesse moyenne :

$$\frac{dWtD_c}{d\bar{v}} = 0 \rightarrow \beta = \bar{v}^2(a_1 + 2\,a_2\bar{v}) \tag{30}$$

Contrairement à la programmation dynamique qui permet d'utiliser directement le terme de consommation dans son algorithme, le principe du minimum de Pontryagin minimise à chaque instant un Hamiltonien $\mathcal{H}$ qui représente le coût instantané de L et la pondération de chaque dynamique du problème. Cela est mis en œuvre par le module de détermination M4.

Selon l'invention, le module de détermination M4 est configuré pour minimiser la fonction dite Hamiltonien :

$$\mathcal{H} = \tilde{L}(u) + \beta + \lambda_s\,v + \lambda_v(u - c_0) \tag{19}$$

où $\tilde{L}(u)$ est défini selon une intégrale de la consommation instantanée sur le trajet en ne considérant que la puissance issue de la machine électrique :

$$J = \int_{t_0}^{t_f} (L(u,v) + \beta)\,dt = \int_{t_0}^{t_f} (P_m(u,v) + \beta)\,dt \tag{20}$$

$$J = (b_1 + b_2 c_0)(s_f - s_0) + \frac{1}{2}b_2(v_f^2 - v_0^2) + 2\,b_3 c_0(v_f - v_0) + \int_{t_0}^{t_f} (b_3\dot{v}(t)^2 + b_3 c_0{}^2 + \beta)\,dt \tag{21}$$

de sorte à en déduire $\tilde{L}(u)$,

$$\tilde{L}(u) = b_3\,(u(t) - c_0)^2 + b_3 c_0{}^2 \tag{22}$$

les variations de co-états pondérant chaque dynamique, sont calculés de la manière suivante :

$$\dot{\lambda}_s = -\frac{d\mathcal{H}}{ds} = 0 \tag{23}$$

et

$$\dot{\lambda}_v = -\frac{d\mathcal{H}}{dv} = -\lambda_s \tag{24}$$

la commande d'accélération optimale non contrainte est alors déduite :

$$\frac{d\mathcal{H}}{du} = 2\,b_3(u - c_0) + \lambda_v = 0 \rightarrow u^* = -\frac{\lambda_v}{2\,b_3} + c_0 \tag{25}$$

et/ou la commande d'accélération optimale contrainte est alors déduite :

$$u(t)^* = \begin{cases} u_{max}, & if\ u(t)^* \geq u_{max} \\ -\dfrac{\lambda_v}{2\,b_3} + c_0, & if\ {-u_{min}} < u(t)^* < u_{max} \\ -u_{min}, & if\ u(t)^* \leq -u_{min} \end{cases} \tag{26}$$

selon l'invention, au final, le système d'équation décrit est défini selon :

$$\dot{x} = H\,x(t) \tag{27}$$

$$x = \{s, v, 1, \lambda_s, \lambda_v, 0\} \tag{28}$$

De préférence, le système comprend en outre un module de calculs de vitesse moyenne M5 sur un horizon tenant compte d'informations de vitesses limites, des obstacles, de trafic en fonction de la distance, de préférence avec une marge sur cette vitesse. Cela se fait en particulier dans une étape S2.

On part du principe que la connaissance de l'horizon nous permet d'accéder à des vitesses limites, des obstacles, du trafic en fonction de la distance. L'association de ces éléments nous permet alors de définir la vitesse limite en fonction de la distance et de déduire une vitesse moyenne sur l'horizon complet appelé $\bar{v}_{ref}$.

La référence Q1 concernent des itérations, les références R1 et R2 concernent respectivement des réponses « oui » et « non » aux questions correspondant aux références Q1 et Q2. Les références S et E désignent respectivement un début et une fin de méthode.

Il est possible d'ajouter une marge sur cette vitesse moyenne à l'aide d'un paramètre $\varepsilon$. Cela se fait en particulier dans une étape S3.

Ensuite intervient le calcul de la pénalité $\beta$ détaillé ci-dessus, en particulier dans une étape S4.

Ensuite intervient le calcul d'une vitesse de croisière optimale $v_{opt,c}$ en particulier dans une étape S5.

L'absence du terme de résistance aérodynamique dans la dynamique d'accélération du véhicule peut entrainer une vitesse optimale qui sous-estime le gain énergétique d'une vitesse inférieure. De plus, les trajectoires d'éco-conduite résultant de la programmation dynamique tendent à proposer une phase de vitesse constante, inférieure à la vitesse maximale autorisée, et qui induirait un gain énergétique important. Pour ces raisons, la vitesse optimale de croisière $v_{opt,c}$ peut être définie selon la minimisation de la dépense énergétique kilométrique.

Ainsi, selon un aspect, le système comprend en outre un module de calculs de vitesse de croisière optimale M8 suivant l'équation

$$v_{opt,c} = \arg\min_{\tilde{v}} \left( \frac{P_{EM}(\tilde{\omega}, \tilde{T}) + \beta\, z}{\tilde{v}} \right) \tag{31}$$

où,

$\tilde{\omega}$, $\tilde{T}$ est le régime et le couple de machine électrique associé à la vitesse $\tilde{v}$ (en rad/s et N/m) ;
$\tilde{v}$ est la fenêtre de vitesse utilisée pour la recherche de $v_{opt,c}$ (en m/s) ;
$z$ est le facteur d'échelle associant la pénalité de temps à la vitesse constante optimale.

Ensuite intervient un découpage du problème en plusieurs tronçon, en particulier dans une étape S6.

Dans le cas d'une application sur un cycle de conduite, il est proposé dans l'invention de découper dans un premier le problème d'optimisation par plusieurs tronçons selon la distance où la vitesse maximale est constante.

Ensuite, les arrêts peuvent être définis par un seul point entre 2 tronçons où la vitesse limite est nulle. Enfin, de préférence, si un enchaînement de plusieurs tronçons de vitesse limite implique une accélération ou une décélération au-delà des valeurs définies pour le véhicule, alors le tronçon intermédiaire est supprimé.

La vitesse initiale d'un tronçon correspond à la vitesse finale du tronçon précédent.

La vitesse finale définie pour chaque tronçon correspond à la vitesse limite de ce tronçon.

Ensuite intervient une association de tronçons à des modes de conduite, en particulier dans une étape S7.

Chaque tronçon est associé à un des modes de conduite suivant :

- MA : accélération maximale (Maximum Acceleration) ;
- PA : accélération partielle (Partial Acceleration) ;
- CS : vitesse constante (Constant Speed) ;
- MD : décélération maximale (Maximum Deceleration).

Ensuite intervient une association de tous les tronçons pour calculer une solution analytique en déduisant le profil de vitesse, le temps de trajet, et la consommation, en particulier dans une étape S8.

Pour calculer la solution analytique, l'enchaînement de ces modes de conduite peut être catégorisé de la manière suivante :

Accélérations :

- (MA)-PA-CS ;
- (MA)-PA.

Décélérations :

- CS-PA-(MD) ;

- PA-(MD).

Eco-Conduite :

- (MA)-PA-(MD) ;
- (MA)-PA-CS-PA-(MD).

Les modes de conduite entre parenthèses sont considérés comme optionnels.

La référence Q2 concerne la détermination d'une hypothèse d'objectif de temps de trajet respectée ou non. Dans la négative, une étape S9 intervient consistant à ajuster la valeur du paramètre de marge ε.

Des modules M9-M12 correspondant respectivement aux étapes S6-S9 peuvent être prévus pour la mise en œuvre de ces étapes.

Dans une variante, selon les informations à disposition sur l'horizon, le choix suivant est effectué :

- Si l'algorithme ne dispose pas d'informations sur la fin du cycle de conduite alors on choisit un enchaînement de catégorie « Accélérations » ;
- Si la vitesse du véhicule est positive et l'algorithme dispose d'informations sur la fin du cycle alors on choisit un enchaînement de la catégorie « Décélérations » ;
- Si le véhicule est à l'arrêt et l'algorithme dispose d'informations sur la fin du cycle de conduite alors on choisit un enchaînement de la catégorie « Eco-Trip ».

Par défaut, les enchaînements sélectionnés sont les plus longs. En revanche, il pourra être astucieux de définir une méthode pour sélectionner un enchaînement de mode de conduite plus court afin de limiter la charge du calculateur.

Chaque enchaînement possède sa propre expression du temps final, des contraintes d'entrées et des temps de changement de mode de conduite.

Dans le cas d'une « Eco-conduite » où la séquence de mode de conduite est MA-PA-CS-PA-MD, la solution au système Hamiltonien linéaire à temps variable peut être la suivante :

$$x(t_f) = e^{H_d(t_f - t_d)} e^{H_p(t_d - t_c)} e^{H_c(t_c - t_b)} e^{H_p(t_b - t_a)} e^{H_a(t_a)} x(t_0) \qquad (32)$$

permettant d'obtenir un profil de vitesse optimisé de manière analytique où $v_{max} = v_{opt,c}$ suivant l'équation :

$$v(t)^* = \begin{cases} (-c_0 + u_{max})t + v_0, & if\ t \in [0, t_a) \\ \dfrac{\lambda_{s,0}}{4\,b_3} t^2 - \dfrac{\lambda_{v,0}}{2\,b_3} t + \tilde{v}_a, & if\ t \in [t_a, t_b) \\ v_{max}, & if\ t \in [t_b, t_c) \\ \dfrac{\lambda_{s,0}}{4\,b_3} t^2 + \dfrac{\lambda_{s,0}(t_a - t_b) - \lambda_{v,0}}{2\,b_3} t + \tilde{v}_c, & if\ t \in [t_c, t_d) \\ (-c_0 - u_{min})t + \tilde{v}_d, & if\ t \in [t_d, t_f) \end{cases} \qquad (33)$$

où les vitesses initiales sont explicitement définies par :

$$\tilde{v}_a = v_0 + t_a(-c_0 + u_{max}) + \frac{\lambda_{v,0} t_a}{2\,b_3} - \frac{\lambda_{s,0} t_a^2}{4\,b_3} \qquad (34)$$

$$\tilde{v}_c = v_{max} + \frac{\lambda_{v,0} t_c}{2\,b_3} + \frac{\lambda_{s,0} t_c(t_c - 2t_b)}{4\,b_3} \qquad (35)$$

$$\tilde{v}_d = \tilde{v}_c + t_d(c_0 + u_{min}) + \frac{\lambda_{v,0} t_d}{2\,b_3} + \frac{\lambda_{s,0} t_d(t_d - 2(t_c + t_b))}{4\,b_3} \qquad (36)$$

et les co-états et temps de commutations sont :

$$\lambda_{s,0} = -\frac{b_3 c_0^2 + \beta}{v_{max}} \tag{37}$$

$$\lambda_{v,0} = -\frac{\lambda_{s,0}(v_{max} - v_0) - b_3(c_0 - u_{max})^2}{(c_0 - u_{max})} \tag{38}$$

$$t_a = -\frac{\lambda_{s,0}(v_{max} - v_0) + b_3(c_0 - u_{max})^2}{\lambda_{s,0}\ (c_0 - u_{max})} \tag{39}$$

$$t_b = -\frac{\lambda_{s,0}(v_{max} - v_0) - b_3(c_0 - u_{max})^2}{\lambda_{s,0}\ (c_0 - u_{max})} \tag{40}$$

$$t_c = \frac{\lambda_{s,0}\big(v_f - v_{max} + t_f(c_0 + u_{min})\big) + b_3(c_0 + u_{min})^2}{\lambda_{s,0}\ (c_0 + u_{min})} \tag{41}$$

$$t_d = \frac{\lambda_{s,0}\big(v_f - v_{max} + t_f(c_0 + u_{min})\big) - b_3(c_0 + u_{min})^2}{\lambda_{s,0}\ (c_0 + u_{min})} \tag{42}$$

$$t_f = -\frac{\psi}{6\ v_{max}(c_0 + u_{min})(b_3 c_0^2 + \beta)^2\ (c_0 - u_{max})} \tag{43}$$

$$
\begin{aligned}
\psi = \Big( & (u_{min} + u_{max})\,(3\,\beta^2 + 6\,b_3\,\beta\,c_0{}^2) \\
& + b_3{}^2\,(c_0{}^2\,(-4\,u_{min}{}^3 + 6\,u_{min}{}^2\,u_{max} + 6\,u_{min}\,u_{max}{}^2 \\
& - 4\,u_{max}{}^3) \\
& - c_0\,(u_{min}{}^4 - 4\,u_{min}{}^3\,u_{max} + 4\,u_{min}\,u_{max}{}^3 - u_{max}{}^4) \\
& - 6\,c_0{}^3\,(u_{min}{}^2 - u_{max}{}^2) + u_{min}\,u_{max}{}^4 + u_{min}{}^4\,u_{max})\Big)\,v_{max}{}^2 \quad (44) \\
& - 6\,(b_3\,c_0{}^2 + \beta)^2\,\Big(u_{max}\,v_f + u_{min}\,v_0 - c_0\,(v_f - v_0)\Big)\,v_{max} \\
& - (b_3\,c_0{}^2 + \beta)^2\,\Big(3\,c_0\,(v_f{}^2 - v_0{}^2) + 6\,c_0{}^2\,s_f \\
& - u_{max}\,(3\,v_f{}^2 + 6\,c_0\,s_f) + u_{min}\,(6\,c_0\,s_f - 3\,v_0{}^2) \\
& - 6\,s_f\,u_{min}\,u_{max}\Big)
\end{aligned}
$$

est...Si le temps de trajet déduit est supérieur au temps de trajet souhaité, alors la valeur $\varepsilon$ peut être augmentée. Cela aura pour conséquence d'augmenter $\beta$ et donc $v_{max}$.

Dans une variante, tous les enchaînements de modes de conduite possibles sont mis en œuvre.

Dans une autre variante, un mode de décélération partielle est ajouté aux autres modes de conduite.

Dans une variante, $v_{opt}$ dépend de la puissance de la batterie avec auxiliaires inclus, ou tout autre modèle de consommation reliant une consommation énergétique à une vitesse de croisière.

Dans une variante, une vitesse minimum est ajoutée aux calculs du module d'optimisation

**Revendications**

1. Système mettant en œuvre des calculs pour déterminer une trajectoire en minimisant la consommation d'énergie d'un véhicule automobile, le système comprenant :

   - un module de modèles de dynamique (M1) et de consommation énergétique (M2) configuré pour définir des paramètres de roulage,
   - un module d'optimisation (M3) configuré pour définir des contraintes de roulage en fonction des paramètres de roulage,
   - un module de détermination de trajectoire (M4) par calculs selon un principe du minimum de Pontryagin minimisant une fonction dite Hamiltonien desdits paramètres de roulage,

   **caractérisé en ce que** :

   - le modèle de dynamique étant défini selon les équations :

$$\dot{s}(t) = v(t) \tag{1}$$

$$\dot{v}(t) = u(t) - c_0 \tag{6}$$

   où

   $s$ est la position du véhicule (en m) ;
   $v$ est la vitesse du véhicule (en m/s) ;
   $t$ est le temps (en s) ;
   $c_0 = \underline{a}_0/m$ ;
   $\underline{a}_0 = \overline{a} + m\,g\,\sin(\theta(s))$ est la résistance au roulage et à la pente (en N) ;
   $\overline{a}$ est la résistance au roulage à vitesse nulle (en N) ;
   $m$ est la masse du véhicule en kg ;
   $\theta$ est la pente de la route (en rad) ;
   $u$ est la commande d'accélération (en m/s$^2$) le modèle de consommation énergétique étant défini par l'équation :

$$P_b(t) = P_m(t) + P_{aux} \,. \tag{8}$$

   où
   $P_b$ est la puissance tirée de la batterie (en W) ;
   $P_{aux}$ est la puissance consommée par les auxiliaires (en W) ;
   $P_m$ est la puissance électrique consommée par la machine (en W) tel que :

$$P_m(u, v) = b_1\,v(t) + b_2\,u(t)\,v(t) + b_3\,u(t) \tag{9}$$

   où $b_1$ représente les pertes par friction (en W/(m/s)) ;
   $b_2$ représente la puissance mécanique équivalente (en W/(m$^2$/s3)) ;
   $b_3$ représente les pertes ohmiques (en W/(m/s$^2$)),

   - le module d'optimisation (M3) étant configuré pour résoudre les équations suivantes :

$$\min_{\{u(t),s(t),v(t),t_f\}} \int_{t_0}^{t_f} (L(u, v) + \beta)\, dt \tag{10}$$

   selon

$$\dot{s}(t) = v(t) \tag{11}$$

$$\dot{v}(t) = u(t) - c_0 \tag{12}$$

$$s(t_0) = s_0 \tag{13}$$

$$s(t_f) = s_f \tag{14}$$

$$v(t_0) = v_0 \tag{15}$$

$$v(t_f) = v_f \tag{16}$$

$$v_{min} \le v(t) \le v_{max} \tag{17}$$

$$-u_{min} \le u(t) \le u_{max} \tag{18}$$

où

$L$ est la consommation énergétique instantanée du véhicule (en W) ;
$\beta$ est la pénalité priorisant la durée du trajet sur le gain énergétique ;
$s_0$, $s_f$ sont les contraintes de position initiale et finale ;
$v_0$, $v_f$ sont les contraintes de vitesse initiale et finale ;
$v_{min}$, $v_{max}$ sont les contraintes de vitesse minimale et maximale ;
$u_{min}$, $u_{max}$ sont les contraintes d'accélération minimale et maximale,

- le module de détermination (M4) étant configuré pour minimiser la fonction dite Hamiltonien :

$$\mathcal{H} = \tilde{L}(u) + \beta + \lambda_s\, v + \lambda_v(u - c_0) \tag{19}$$

où

$\lambda_s$, et $\lambda_v$ sont des variations de co-états pondérant chaque dynamique, $\tilde{L}(u)$ correspond à l'énergie qu'il est possible d'économiser sur le trajet

$$\tilde{L}(u) = b_3\,(u(t) - c_0)^2 + b_3 {c_0}^2 \tag{22}$$

les variations de co-états pondérant chaque dynamique, étant calculées de la manière suivante :

$$\dot{\lambda}_s = -\frac{d\mathcal{H}}{ds} = 0 \tag{23}$$

et

- 23-

$$\dot{\lambda}_v = -\frac{d\mathcal{H}}{dv} = -\lambda_s \tag{24}$$

la commande d'accélération optimale non contrainte étant de préférence alors déduite :

$$\frac{d\mathcal{H}}{du} = 2\,b_3(u - c_0) + \lambda_v = 0 \rightarrow u^* = -\frac{\lambda_v}{2\,b_3} + c_0 \tag{25}$$

et/ou la commande d'accélération optimale contrainte étant de préférence alors déduite :

$$u(t)^* = \begin{cases} u_{max}, & if \ u(t)^* \geq u_{max} \\ -\dfrac{\lambda_v}{2 \, b_3} + c_0, & if \ -u_{min} < u(t)^* < u_{max} \\ -u_{min}, & if \ u(t)^* \leq -u_{min} \end{cases} \qquad (26)$$

avec au final, le système d'équation décrit est défini selon :

$$\dot{x} = H \, x(t) \qquad (27)$$

$$x = \{s, v, 1, \lambda_s, \lambda_v, 0\} \qquad (28)$$

2. Système selon la revendication 1, comprenant en outre un module de calculs de vitesse moyenne (M5) sur un horizon tenant compte d'informations de vitesses limites, des obstacles, de trafic en fonction de la distance, de préférence avec une marge sur cette vitesse

3. Système selon la revendication 1 ou la revendication 2, comprenant en outre un module de calculs de pénalité (M7) ayant un impact sur la vitesse moyenne suivant l'équation

$$WtD_c = a_0 + a_1\bar{v} + a_2\bar{v}^2 + \frac{\beta}{\bar{v}} \qquad (29)$$

avec $\bar{v} = \bar{v}_{ref} + \varepsilon$
où,

$WtD_c$ est la consommation kilométrique moyenne,
$\bar{v}_{ref}$ est la vitesse moyenne du cycle original de conduite (en m/s),
$\varepsilon$ est un paramètre à calibrer afin d'atteindre le temps de trajet souhaité (en m/s),
$a_0$ est la résistance au roulage et la pente (en N),
$a_1$ est la résistance au roulage (en N/(m/s)),
$a_2$ est la résistance aérodynamique (en N/(m$^2$/s$^2$)).

4. Système selon l'une quelconque des revendications 1 à 3, comprenant en outre un module de calculs de vitesse de croisière optimale (M8) suivant l'équation

- 24-

$$v_{opt,c} = \arg \min_{\tilde{v}} \left( \frac{P_{EM}\left(\tilde{\omega}, \tilde{T}\right) + \beta \, z}{\tilde{v}} \right) \qquad (31)$$

où,

$\tilde{\omega}, \tilde{T}$ est le régime et le couple de machine électrique associé à la vitesse $\tilde{v}$ (en rad/s et N/m) ;
$\tilde{v}$ est la fenêtre de vitesse utilisée pour la recherche de $v_{opt,c}$ (en m/s) ;
$z$ est le facteur d'échelle associant la pénalité de temps à la vitesse constante optimale.

5. Système selon l'une quelconque des revendications 1 à 4, comprenant en outre au moins un module d'adaptation à plusieurs tronçons (M9-M11) configuré pour adapter les calculs à plusieurs tronçons successifs où au moins un paramètre de roulage est sensiblement constant, pour associer chaque tronçon à un des modes de conduite suivant:

- accélération maximale,
- accélération partielle,
- vitesse constante,
- décélération maximale ;

pour catégoriser l'enchaînement des modes de conduite en

- enchaînement d'accélération : optionnellement accélération maximale, puis accélération partielle, puis optionnellement vitesse constante ;
- enchaînement de décélération : optionnellement vitesse constante, puis accélération partielle, puis optionnellement décélération maximale ;
- enchaînement de conduite économique : optionnellement accélération maximale, puis accélération partielle, puis optionnellement décélération maximale ; ou optionnellement accélération maximale, puis accélération partielle, puis vitesse constante, puis accélération partielle, puis optionnellement décélération maximale.

6. Système selon la revendication 5, **caractérisé en ce que** l'enchaînement de conduite économique comporte les modes de conduite accélération maximale, puis accélération partielle, puis vitesse constante, puis accélération partielle, puis optionnellement décélération maximale, et la solution au système Hamiltonien linéaire à temps variable est la suivante :

$$x\big(t_f\big) = e^{H_d(t_f-t_d)}e^{H_p(t_d-t_c)}e^{H_c(t_c-t_b)}e^{H_p(t_b-t_a)}e^{H_a(t_a)}\,x(t_0) \qquad (32)$$

permettant d'obtenir un profil de vitesse optimisé de manière analytique où $v_{max} = v_{opt,c}$ suivant l'équation

$$v(t)^* = \begin{cases} (-c_0 + u_{max})t + v_0, & if\ t \in [0, t_a) \\ \dfrac{\lambda_{s,0}}{4\,b_3}t^2 - \dfrac{\lambda_{v,0}}{2\,b_3}t + \tilde{v}_a, & if\ t \in [t_a, t_b) \\ v_{max}, & if\ t \in [t_b, t_c) \\ \dfrac{\lambda_{s,0}}{4\,b_3}t^2 + \dfrac{\lambda_{s,0}(t_a - t_b) - \lambda_{v,0}}{2\,b_3}t + \tilde{v}_c, & if\ t \in [t_c, t_d) \\ (-c_0 - u_{min})t + \tilde{v}_d, & if\ t \in [t_d, t_f) \end{cases} \qquad (33)$$

où les vitesses initiales sont explicitement définies par :

$$\tilde{v}_a = v_0 + t_a(-c_0 + u_{max}) + \frac{\lambda_{v,0}t_a}{2\,b_3} - \frac{\lambda_{s,0}t_a{}^2}{4\,b_3} \qquad (34)$$

$$\tilde{v}_c = v_{max} + \frac{\lambda_{v,0}t_c}{2\,b_3} + \frac{\lambda_{s,0}t_c(t_c - 2t_b)}{4\,b_3} \qquad (35)$$

$$\tilde{v}_d = \tilde{v}_c + t_d(c_0 + u_{min}) + \frac{\lambda_{v,0}t_d}{2\,b_3} + \frac{\lambda_{s,0}t_d(t_d - 2(t_c + t_b))}{4\,b_3} \qquad (36)$$

Et des co-états et temps de commutations correspondants sont :

$$\lambda_{s,0} = -\frac{b_3 c_0^2 + \beta}{v_{max}} \qquad (37)$$

$$\lambda_{v,0} = -\frac{\lambda_{s,0}(v_{max} - v_0) - b_3(c_0 - u_{max})^2}{(c_0 - u_{max})} \qquad (38)$$

$$t_a = -\frac{\lambda_{s,0}(v_{max} - v_0) + b_3(c_0 - u_{max})^2}{\lambda_{s,0}\,(c_0 - u_{max})} \qquad (39)$$

$$t_b = -\frac{\lambda_{s,0}(v_{max} - v_0) - b_3(c_0 - u_{max})^2}{\lambda_{s,0}\,(c_0 - u_{max})} \tag{40}$$

$$t_c = \frac{\lambda_{s,0}\big(v_f - v_{max} + t_f(c_0 + u_{min})\big) + b_3(c_0 + u_{min})^2}{\lambda_{s,0}\,(c_0 + u_{min})} \tag{41}$$

$$t_d = \frac{\lambda_{s,0}\big(v_f - v_{max} + t_f(c_0 + u_{min})\big) - b_3(c_0 + u_{min})^2}{\lambda_{s,0}\,(c_0 + u_{min})} \tag{42}$$

$$t_f = -\frac{\psi}{6\,v_{max}(c_0 + u_{min})(b_3 c_0^2 + \beta)^2\,(c_0 - u_{max})} \tag{43}$$

$$\begin{aligned}
\psi = &\Big((u_{\min} + u_{\max})\,(3\,\beta^2 + 6\,b_3\,\beta\,c_0{}^2) \\
&+ b_3{}^2\,(c_0{}^2\,(-4\,u_{\min}{}^3 + 6\,u_{\min}{}^2\,u_{\max} + 6\,u_{\min}\,u_{\max}{}^2 \\
&- 4\,u_{\max}{}^3) \\
&- c_0\,(u_{\min}{}^4 - 4\,u_{\min}{}^3\,u_{\max} + 4\,u_{\min}\,u_{\max}{}^3 - u_{\max}{}^4) \\
&- 6\,c_0{}^3\,(u_{\min}{}^2 - u_{\max}{}^2) + u_{\min}\,u_{\max}{}^4 + u_{\min}{}^4\,u_{\max})\Big)\,v_{\max}{}^2 \quad (44)\\
&- 6\,(b_3\,c_0{}^2 + \beta)^2\,\Big(u_{\max}\,v_f + u_{\min}\,v_0 - c_0\,(v_f - v_0)\Big)\,v_{\max} \\
&- (b_3\,c_0{}^2 + \beta)^2\,\Big(3\,c_0\,(v_f{}^2 - v_0{}^2) + 6\,c_0{}^2\,s_f \\
&- u_{\max}\,(3\,v_f{}^2 + 6\,c_0\,s_f) + u_{\min}\,(6\,c_0\,s_f - 3\,v_0{}^2) \\
&- 6\,s_f\,u_{\min}\,u_{\max}\Big)
\end{aligned}$$

7. Véhicule automobile comprenant un système selon l'une quelconque des revendications 1 à 6.

**Patentansprüche**

1. System, das Berechnungen zur Bestimmung einer Trajektorie unter Minimierung des Energieverbrauchs eines Kraftfahrzeugs durchführt, wobei das System Folgendes umfasst:

- ein Modellmodul für Dynamik (M1) und Energieverbrauch (M2), das zur Definition von Fahrparametern konfiguriert ist,
- ein Optimierungsmodul (M3), das zur Definition von Fahrbeschränkungen als Funktion der Fahrparameter konfiguriert ist,
- ein Trajektorienbestimmungsmodul (M4) durch Berechnungen nach einem Pontryagin-Minimumprinzip, das eine sogenannte Hamilton-Funktion der genannten Fahrparameter minimiert.

**dadurch gekennzeichnet**:

- das Dynamikmodell wird gemäß den Gleichungen definiert:

$$\dot{s}(t) = v(t) \tag{1}$$

$$\dot{v}(t) = u(t) - c_0 \tag{6}$$

Oder

$s$ ist die Position des Fahrzeugs (in m);
$v$ ist die Geschwindigkeit des Fahrzeugs (in m/s);
$t$ ist die Zeit (in Sekunden);
$c_0 = a_0/m$;
$a_0 = \bar{a} + m\,g\,\sin(\theta(s))$ ist der Roll- und Hangwiderstand (in N);
$\bar{a}$ ist der Rollwiderstand bei Geschwindigkeit Null (in N);
$m$ ist die Masse des Fahrzeugs in kg;
$\theta$ ist die Steigung der Straße (in rad);
$u$ ist der Beschleunigungsbefehl (in m/s$^2$), wobei das Energieverbrauchsmodell durch die Gleichung definiert wird :

$$P_b(t) = P_m(t) + P_{aux}\,. \tag{8}$$

Oder
$P_b$ ist die von der Batterie entnommene Leistung (in W);
$P_{aux}$ ist die von den Hilfsaggregaten verbrauchte Leistung (in W);
$P_m$ ist die elektrische Leistung, die von der Maschine verbraucht wird (in W), sodass:

$$P_m(u,v) = b_1\,v(t) + b_2\,u(t)\,v(t) + b_3\,u(t) \tag{9}$$

Oder
$b_1$ stellt Reibungsverluste dar (in W/(m/s));
$b_2$ stellt die äquivalente mechanische Leistung dar (in W/(m$^2$/s$^3$));
$b_3$ stellt die ohmschen Verluste dar (in W/(m/s$^2$)),

- das Optimierungsmodul (M3) ist so konfiguriert, dass es die folgenden Gleichungen löst:

$$\min_{\{u(t),s(t),v(t),t_f\}} \int_{t_0}^{t_f} (L(u,v) + \beta)\,dt \tag{10}$$

entsprechend

$$\dot{s}(t) = v(t) \tag{11}$$

$$\dot{v}(t) = u(t) - c_0 \tag{12}$$

$$s(t_0) = s_0 \tag{13}$$

$$s(t_f) = s_f \tag{14}$$

$$v(t_0) = v_0 \tag{15}$$

$$v(t_f) = v_f \tag{16}$$

$$v_{min} \leq v(t) \leq v_{max} \tag{17}$$

$$-u_{min} \leq u(t) \leq u_{max} \tag{18}$$

Oder

$L$ ist der momentane Energieverbrauch des Fahrzeugs (in W);
$\beta$ ist die Strafe, die der Reisezeit Vorrang vor Energieeinsparungen einräumt; $s_0, s_f$ sind die anfänglichen und endgültigen Positionsbeschränkungen;
$v_0, v_f$ sind die Anfangs- und Endgeschwindigkeitsbeschränkungen;
$v_{min}$, $v_{max}$ sind die minimalen und maximalen Geschwindigkeitsbeschränkungen; $u_{min}$, $u_{max}$ sind die minimalen und maximalen Beschleunigungsbeschränkungen,

- das Bestimmungsmodul (M4) ist so konfiguriert, dass die sogenannte Hamilton-Funktion minimiert wird:

$$\mathcal{H} = \tilde{L}(u) + \beta + \lambda_s\, v + \lambda_v(u - c_0) \qquad (19)$$

**Oder**

$\lambda_s$ und $\lambda_v$ sind Variationen von Kozuständen, die jede Dynamik gewichten, $\tilde{L}(u)$ entspricht der Energie, die auf der Reise eingespart werden kann.

$$\tilde{L}(u) = b_3\,(u(t) - c_0)^2 + b_3 c_0{}^2 \qquad (22)$$

Die Gewichtung der einzelnen dynamischen Aspekte der Ko-Zustandsvariationen wird wie folgt berechnet:

$$\dot{\lambda}_s = -\frac{d\mathcal{H}}{ds} = 0 \qquad (23)$$

Und

$$\dot{\lambda}_v = -\frac{d\mathcal{H}}{dv} = -\lambda_s \qquad (24)$$

Der optimale, uneingeschränkte Beschleunigungsbefehl wird dann vorzugsweise abgeleitet:

$$\frac{d\mathcal{H}}{du} = 2\,b_3(u - c_0) + \lambda_v = 0 \rightarrow u^* = -\frac{\lambda_v}{2\,b_3} + c_0 \qquad (25)$$

und/oder die optimale Beschleunigungsregelungsbeschränkung wird dann vorzugsweise abgeleitet:

$$u(t)^* = \begin{cases} u_{max}, & if\ u(t)^* \geq u_{max} \\ -\dfrac{\lambda_v}{2\,b_3} + c_0, & if\ -u_{min} < u(t)^* < u_{max} \\ -u_{min}, & if\ u(t)^* \leq -u_{min} \end{cases} \qquad (26)$$

Das beschriebene Gleichungssystem ist letztlich wie folgt definiert:

$$\dot{x} = H\,x(t) \qquad (27)$$

$$x = \{s, v, 1, \lambda_s, \lambda_v, 0\} \qquad (28)$$

2.  System nach Anspruch 1, ferner umfassend ein Modul (M5) zur Berechnung der Durchschnittsgeschwindigkeit über einen Horizont unter Berücksichtigung von Geschwindigkeitsbegrenzungen, Hindernissen und Verkehr in Abhängigkeit von der Entfernung, vorzugsweise mit einem Sicherheitszuschlag.

3. System nach Anspruch 1 oder 2, ferner umfassend ein Strafberechnungsmodul (M7), das sich gemäß der Gleichung auf die Durchschnittsgeschwindigkeit auswirkt.

$$WtD_c = a_0 + a_1\bar{v} + a_2\bar{v}^2 + \frac{\beta}{\bar{v}} \qquad (29)$$

mit $\bar{v} = \bar{v}_{ref} + \varepsilon$
Oder,

$WtD_c$ ist der durchschnittliche Kraftstoffverbrauch pro Kilometer,
$\bar{v}_{ref}$ ist die Durchschnittsgeschwindigkeit des ursprünglichen Fahrzyklus (in m/s).
$\varepsilon$ ist ein Parameter, der kalibriert werden muss, um die gewünschte Reisezeit (in m/s) zu erreichen.
$a_0$ ist der Rollwiderstand und die Steigung (in N),
$a_1$ ist der Rollwiderstand (in N/(m/s)).
$a^2$ ist der aerodynamische Widerstand (in N/(m$^{2/}$s$^2$)).

4. System nach einem der Ansprüche 1 bis 3, ferner umfassend ein Modul (M8) zur Berechnung der optimalen Reisegeschwindigkeit gemäß der Gleichung

$$v_{opt,c} = \arg\min_{\tilde{v}} \left( \frac{P_{EM}(\tilde{\omega}, \tilde{T}) + \beta z}{\tilde{v}} \right) \qquad (31)$$

Oder,

$\tilde{\omega}, \tilde{T}$ ist die Drehzahl und das Drehmoment der elektrischen Maschine, die mit der Drehzahl verbunden sind $\tilde{v}$ (in rad/s und N/m);
$\tilde{v}$ ist das für die Suche verwendete Geschwindigkeitsfenster $v_{opt,c}$ (in m/s);
$z$ ist der Skalierungsfaktor, der die Zeitstrafe mit der optimalen konstanten Geschwindigkeit verknüpft.

5. System nach einem der Ansprüche 1 bis 4, ferner umfassend mindestens ein mehrteiliges Anpassungsmodul (M9-M11), das so konfiguriert ist, dass es Berechnungen an mehrere aufeinanderfolgende Abschnitte anpasst, in denen mindestens ein Fahrparameter im Wesentlichen konstant ist, um jeden Abschnitt einem der folgenden Fahrmodi zuzuordnen:

- maximale Beschleunigung,
- Teilbeschleunigung, - konstante Geschwindigkeit, - maximale Verzögerung; um die Abfolge der Fahrmodi wie folgt zu kategorisieren:
- Beschleunigungssequenz: optional maximale Beschleunigung, dann Teilbeschleunigung, dann optional konstante Geschwindigkeit;
- Verzögerungssequenz: optional konstante Geschwindigkeit, dann Teilbeschleunigung, dann optional maximale Verzögerung ;
- wirtschaftliche Fahrsequenz: optional maximale Beschleunigung, dann Teilbeschleunigung, dann optional maximale Verzögerung ; oder optional maximale Beschleunigung, dann Teilbeschleunigung, dann konstante Geschwindigkeit, dann Teilbeschleunigung, dann optional maximale Verzögerung .

6. System nach Anspruch 5, **dadurch gekennzeichnet, dass** die ökonomische Fahrsequenz die Fahrmodi maximale Beschleunigung, dann Teilbeschleunigung, dann konstante Geschwindigkeit, dann Teilbeschleunigung, dann optional maximale Verzögerung umfasst, und die Lösung des linearen Hamiltonschen Systems mit variabler Zeit wie folgt lautet:

$$x(t_f) = e^{H_d(t_f - t_a)} e^{H_p(t_d - t_c)} e^{H_c(t_c - t_b)} e^{H_p(t_b - t_a)} e^{H_a(t_a)} x(t_0) \qquad (32)$$

ermöglicht ein analytisch optimiertes Geschwindigkeitsprofil, bei dem $v_{max} = v_{opt,c}$ gemäß der Gleichung

$$v(t)^* = \begin{cases} (-c_0 + u_{max})t + v_0, & \text{if } t \in [0, t_a) \\ \dfrac{\lambda_{s,0}}{4\,b_3}t^2 - \dfrac{\lambda_{v,0}}{2\,b_3}t + \tilde{v}_a, & \text{if } t \in [t_a, t_b) \\ v_{max}, & \text{if } t \in [t_b, t_c) \\ \dfrac{\lambda_{s,0}}{4\,b_3}t^2 + \dfrac{\lambda_{s,0}(t_a - t_b) - \lambda_{v,0}}{2\,b_3}t + \tilde{v}_c, & \text{if } t \in [t_c, t_d) \\ (-c_0 - u_{min})t + \tilde{v}_d, & \text{if } t \in [t_d, t_f) \end{cases} \qquad (33)$$

wobei die Anfangsgeschwindigkeiten explizit definiert sind durch:

$$\tilde{v}_a = v_0 + t_a(-c_0 + u_{max}) + \frac{\lambda_{v,0} t_a}{2\,b_3} - \frac{\lambda_{s,0} t_a^{\,2}}{4\,b_3} \qquad (34)$$

$$\tilde{v}_c = v_{max} + \frac{\lambda_{v,0} t_c}{2\,b_3} + \frac{\lambda_{s,0} t_c(t_c - 2t_b)}{4\,b_3} \qquad (35)$$

$$\tilde{v}_d = \tilde{v}_c + t_d(c_0 + u_{min}) + \frac{\lambda_{v,0} t_d}{2\,b_3} + \frac{\lambda_{s,0} t_d(t_d - 2(t_c + t_b))}{4\,b_3} \qquad (36)$$

Die zugehörigen Kozustände und Schaltzeiten sind:

$$\lambda_{s,0} = -\frac{b_3 c_0^2 + \beta}{v_{max}} \qquad (37)$$

$$\lambda_{v,0} = -\frac{\lambda_{s,0}(v_{max} - v_0) - b_3(c_0 - u_{max})^2}{(c_0 - u_{max})} \qquad (38)$$

$$t_a = -\frac{\lambda_{s,0}(v_{max} - v_0) + b_3(c_0 - u_{max})^2}{\lambda_{s,0}\,(c_0 - u_{max})} \qquad (39)$$

$$t_b = -\frac{\lambda_{s,0}(v_{max} - v_0) - b_3(c_0 - u_{max})^2}{\lambda_{s,0}\,(c_0 - u_{max})} \qquad (40)$$

$$t_c = \frac{\lambda_{s,0}\big(v_f - v_{max} + t_f(c_0 + u_{min})\big) + b_3(c_0 + u_{min})^2}{\lambda_{s,0}\,(c_0 + u_{min})} \qquad (41)$$

$$t_d = \frac{\lambda_{s,0}\big(v_f - v_{max} + t_f(c_0 + u_{min})\big) - b_3(c_0 + u_{min})^2}{\lambda_{s,0}\,(c_0 + u_{min})} \qquad (42)$$

$$t_f = -\frac{\psi}{6\,v_{max}(c_0 + u_{min})(b_3 c_0^2 + \beta)^2\,(c_0 - u_{max})} \qquad (43)$$

$$\psi = \Big( (u_{\min} + u_{\max})\,(3\,\beta^2 + 6\,b_3\,\beta\,c_0{}^2)$$
$$+ b_3{}^2\,(c_0{}^2\,(-4\,u_{\min}{}^3 + 6\,u_{\min}{}^2\,u_{\max} + 6\,u_{\min}\,u_{\max}{}^2$$
$$- 4\,u_{\max}{}^3)$$
$$- c_0\,(u_{\min}{}^4 - 4\,u_{\min}{}^3\,u_{\max} + 4\,u_{\min}\,u_{\max}{}^3 - u_{\max}{}^4)$$
$$- 6\,c_0{}^3\,(u_{\min}{}^2 - u_{\max}{}^2) + u_{\min}\,u_{\max}{}^4 + u_{\min}{}^4\,u_{\max})\Big)\,v_{\max}{}^2 \qquad (44)$$
$$- 6\,(b_3\,c_0{}^2 + \beta)^2\,\Big(u_{\max}\,v_f + u_{\min}\,v_0 - c_0\,(v_f - v_0)\Big)\,v_{\max}$$
$$- (b_3\,c_0{}^2 + \beta)^2\,\Big(3\,c_0\,(v_f{}^2 - v_0{}^2) + 6\,c_0{}^2\,s_f$$
$$- u_{\max}\,(3\,v_f{}^2 + 6\,c_0\,s_f) + u_{\min}\,(6\,c_0\,s_f - 3\,v_0{}^2)$$
$$- 6\,s_f\,u_{\min}\,u_{\max}\Big)$$

**7.** Kraftfahrzeug, umfassend ein System nach einem der Ansprüche 1 bis 6.

**Claims**

**1.** A system implementing calculations to determine a trajectory while minimizing the energy consumption of a motor vehicle, the system comprising:

- a model module of dynamics (M1) and energy consumption (M2) configured to define driving parameters,
- an optimization module (M3) configured to define driving constraints as a function of the driving parameters,
- a trajectory determination module (M4) by calculations according to a Pontryagin minimum principle minimizing a so-called Hamiltonian function of said driving parameters.

**characterized in that**:

- the dynamics model being defined according to the equations:

$$\dot{s}(t) = v(t) \qquad (1)$$

$$\dot{v}(t) = u(t) - c_0 \qquad (6)$$

Or

$s$ is the position of the vehicle (in m);
$v$ is the speed of the vehicle (in m/s);
$t$ is the time (in s);
$c_0 = \underline{a_0}/m$;
$a_0 = \underline{a} + m\,g\,\sin\,(\theta(s))$ is the rolling and slope resistance (in N);
$\underline{a}$ is the rolling resistance at zero speed (in N);
$m$ is the mass of the vehicle in kg;
$\theta$ is the slope of the road (in rad);
$u$ is the acceleration command (in m/s$^2$) the energy consumption model being defined by the equation :

$$P_b(t) = P_m(t) + P_{aux}\,. \qquad (8)$$

Or
$P_b$ is the power drawn from the battery (in W);
$P_{aux}$ is the power consumed by the auxiliaries (in W);

$P_m$ is the electrical power consumed by the machine (in W) such that:

$$P_m(u,v) = b_1\, v(t) + b_2\, u(t)\, v(t) + b_3\, u(t) \tag{9}$$

Or
$b_1$ represents friction losses (in W/(m/s));
$b_2$ represents the equivalent mechanical power (in W/(m$^2$/s3));
$b_3$ represents the ohmic losses (in W/(m/s$^2$)),

- the optimization module (M3) being configured to solve the following equations:

$$\min_{\{u(t),s(t),v(t),t_f\}} \int_{t_0}^{t_f} (L(u,v) + \beta)\, dt \tag{10}$$

according to

$$\dot{s}(t) = v(t) \tag{11}$$

$$\dot{v}(t) = u(t) - c_0 \tag{12}$$

$$s(t_0) = s_0 \tag{13}$$

$$s(t_f) = s_f \tag{14}$$

$$v(t_0) = v_0 \tag{15}$$

$$v(t_f) = v_f \tag{16}$$

$$v_{min} \le v(t) \le v_{max} \tag{17}$$

$$-u_{min} \le u(t) \le u_{max} \tag{18}$$

Or

$L$ is the instantaneous energy consumption of the vehicle (in W);
$\beta$ is the penalty that prioritizes travel time over energy savings;
$s_0, s_f$ are the initial and final position constraints;
$v_0, v_f$ are the initial and final velocity constraints;
$v_{min}, v_{max}$ are the minimum and maximum speed constraints;
$u_{min}, u_{max}$ are the minimum and maximum acceleration constraints,

- the determination module (M4) being configured to minimize the so-called Hamiltonian function:

$$\mathcal{H} = \tilde{L}(u) + \beta + \lambda_s\, v + \lambda_v(u - c_0) \tag{19}$$

Or

$\lambda_s$, and $\lambda_v$ are variations of co-states weighting each dynamic, $\tilde{L}(u)$ corresponds to the energy that can be saved on the journey

$$\tilde{L}(u) = b_3 \left( u(t) - c_0 \right)^2 + b_3 c_0{}^2 \qquad (22)$$

the co-state variations weighting each dynamic, being calculated as follows:

$$\dot{\lambda}_s = -\frac{d\mathcal{H}}{ds} = 0 \qquad (23)$$

And

$$\dot{\lambda}_v = -\frac{d\mathcal{H}}{dv} = -\lambda_s \qquad (24)$$

The optimal, unconstrained acceleration command is preferably then deduced:

$$\frac{d\mathcal{H}}{du} = 2\,b_3(u - c_0) + \lambda_v = 0 \rightarrow u^* = -\frac{\lambda_v}{2\,b_3} + c_0 \qquad (25)$$

and/or the optimal acceleration control constraint is preferably then deduced:

$$u(t)^* = \begin{cases} u_{max}, & if\ u(t)^* \geq u_{max} \\ -\dfrac{\lambda_v}{2\,b_3} + c_0, & if\ -u_{min} < u(t)^* < u_{max} \\ -u_{min}, & if\ u(t)^* \leq -u_{min} \end{cases} \qquad (26)$$

Ultimately, the system of equations described is defined as follows:

$$\dot{x} = H\,x(t) \qquad (27)$$

$$x = \{s, v, 1, \lambda_s, \lambda_v, 0\} \qquad (28)$$

2. System according to claim 1, further comprising an average speed calculation module (M5) over a horizon taking into account speed limit information, obstacles, and traffic as a function of distance, preferably with a margin on this speed

3. System according to claim 1 or claim 2, further comprising a penalty calculation module (M7) having an impact on the average speed according to the equation

$$WtD_c = a_0 + a_1\bar{v} + a_2\bar{v}^2 + \frac{\beta}{\bar{v}} \qquad (29)$$

with $\bar{v} = \bar{v}_{ref} + \varepsilon$
Or,

$WtD_c$ is the average fuel consumption per kilometer,
$\bar{v}_{ref}$ is the average speed of the original driving cycle (in m/s),
$\varepsilon$ is a parameter that needs to be calibrated in order to achieve the desired travel time (in m/s),
$a_0$ is the rolling resistance and the slope (in N),
$a_1$ is the rolling resistance (in N/(m/s)),
$a_2$ is the aerodynamic resistance (in N/(m$^2$/s$^2$)).

4. System according to any one of claims 1 to 3, further comprising an optimal cruising speed calculation module (M8) according to the equation

$$v_{opt,c} = \arg\min_{\tilde{v}} \left( \frac{P_{EM}(\tilde{\omega}, \tilde{T}) + \beta z}{\tilde{v}} \right) \qquad (31)$$

Or,

$\tilde{\omega}$, $\tilde{T}$ is the speed and torque of the electrical machine associated with the speed $\tilde{v}$(in rad/s and N/m);
$\tilde{v}$ is the speed window used for the search $v_{opt,c}$ (in m/s);
$z$ is the scaling factor associating the time penalty with the optimal constant speed.

5. System according to any one of claims 1 to 4, further comprising at least one multi-section adaptation module (M9-M11) configured to adapt calculations to several successive sections where at least one driving parameter is substantially constant, for associating each section with one of the following driving modes:

   - maximum acceleration,
   - partial acceleration, - constant speed, - maximum deceleration;

   for categorizing the sequence of driving modes into:

   - acceleration sequence: optionally maximum acceleration, then partial acceleration, then optionally constant speed;
   - deceleration sequence: optionally constant speed, then partial acceleration, then optionally maximum deceleration ;
   - economical driving sequence: optionally maximum acceleration, then partial acceleration, then optionally maximum deceleration ; or optionally maximum acceleration, then partial acceleration, then constant speed, then partial acceleration, then optionally maximum deceleration .

6. System according to claim 5, **characterized in that** the economical driving sequence comprises the driving modes maximum acceleration, then partial acceleration, then constant speed, then partial acceleration, then optionally maximum deceleration, and the solution to the linear Hamiltonian system with variable time is as follows:

$$x(t_f) = e^{H_d(t_f - t_a)} e^{H_p(t_d - t_c)} e^{H_c(t_c - t_b)} e^{H_p(t_b - t_a)} e^{H_a(t_a)} \, x(t_0) \qquad (32)$$

allowing for an analytically optimized speed profile where $v_{max} = v_{opt,c}$ according to the equation

$$v(t)^* = \begin{cases} (-c_0 + u_{max})t + v_0, & \text{if } t \in [0, t_a) \\ \dfrac{\lambda_{s,0}}{4\,b_3} t^2 - \dfrac{\lambda_{v,0}}{2\,b_3} t + \tilde{v}_a, & \text{if } t \in [t_a, t_b) \\ v_{max}, & \text{if } t \in [t_b, t_c) \\ \dfrac{\lambda_{s,0}}{4\,b_3} t^2 + \dfrac{\lambda_{s,0}(t_a - t_b) - \lambda_{v,0}}{2\,b_3} t + \tilde{v}_c, & \text{if } t \in [t_c, t_d) \\ (-c_0 - u_{min})t + \tilde{v}_d, & \text{if } t \in [t_d, t_f) \end{cases} \qquad (33)$$

where the initial velocities are explicitly defined by:

$$\tilde{v}_a = v_0 + t_a(-c_0 + u_{max}) + \frac{\lambda_{v,0} t_a}{2\,b_3} - \frac{\lambda_{s,0} t_a^2}{4\,b_3} \qquad (34)$$

$$\tilde{v}_c = v_{max} + \frac{\lambda_{v,0} t_c}{2\,b_3} + \frac{\lambda_{s,0} t_c (t_c - 2t_b)}{4\,b_3} \qquad (35)$$

$$\tilde{v}_d = \tilde{v}_c + t_d(c_0 + u_{min}) + \frac{\lambda_{v,0} t_d}{2\, b_3} + \frac{\lambda_{s,0} t_d (t_d - 2(t_c + t_b))}{4\, b_3} \qquad (36)$$

And the corresponding co-states and switching times are:

$$\lambda_{s,0} = -\frac{b_3 c_0^2 + \beta}{v_{max}} \qquad (37)$$

$$\lambda_{v,0} = -\frac{\lambda_{s,0}(v_{max} - v_0) - b_3(c_0 - u_{max})^2}{(c_0 - u_{max})} \qquad (38)$$

$$t_a = -\frac{\lambda_{s,0}(v_{max} - v_0) + b_3(c_0 - u_{max})^2}{\lambda_{s,0}\,(c_0 - u_{max})} \qquad (39)$$

$$t_b = -\frac{\lambda_{s,0}(v_{max} - v_0) - b_3(c_0 - u_{max})^2}{\lambda_{s,0}\,(c_0 - u_{max})} \qquad (40)$$

$$t_c = \frac{\lambda_{s,0}\left(v_f - v_{max} + t_f(c_0 + u_{min})\right) + b_3(c_0 + u_{min})^2}{\lambda_{s,0}\,(c_0 + u_{min})} \qquad (41)$$

$$t_d = \frac{\lambda_{s,0}\left(v_f - v_{max} + t_f(c_0 + u_{min})\right) - b_3(c_0 + u_{min})^2}{\lambda_{s,0}\,(c_0 + u_{min})} \qquad (42)$$

$$t_f = -\frac{\psi}{6\, v_{max}(c_0 + u_{min})(b_3 c_0^2 + \beta)^2\,(c_0 - u_{max})} \qquad (43)$$

$$\begin{aligned}
\psi = \Big( & (u_{min} + u_{max})\,(3\,\beta^2 + 6\,b_3\,\beta\,c_0{}^2) \\
& + b_3{}^2\,(c_0{}^2\,(-4\,u_{min}{}^3 + 6\,u_{min}{}^2\,u_{max} + 6\,u_{min}\,u_{max}{}^2 \\
& - 4\,u_{max}{}^3) \\
& - c_0\,(u_{min}{}^4 - 4\,u_{min}{}^3\,u_{max} + 4\,u_{min}\,u_{max}{}^3 - u_{max}{}^4) \\
& - 6\,c_0{}^3\,(u_{min}{}^2 - u_{max}{}^2) + u_{min}\,u_{max}{}^4 + u_{min}{}^4\,u_{max})\Big)\,v_{max}{}^2 \quad (44) \\
& - 6\,(b_3\,c_0{}^2 + \beta)^2\,\Big(u_{max}\,v_f + u_{min}\,v_0 - c_0\,(v_f - v_0)\Big)\,v_{max} \\
& - (b_3\,c_0{}^2 + \beta)^2\,\Big(3\,c_0\,(v_f{}^2 - v_0{}^2) + 6\,c_0{}^2\,s_f \\
& - u_{max}\,(3\,v_f{}^2 + 6\,c_0\,s_f) + u_{min}\,(6\,c_0\,s_f - 3\,v_0{}^2) \\
& - 6\,s_f\,u_{min}\,u_{max}\Big)
\end{aligned}$$

7. Motor vehicle comprising a system according to any one of claims 1 to 6.

[Fig. 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3068322 A1

**Littérature non-brevet citée dans la description**

- Optimal Ecodriving Control : Energy-Efficient Driving of Road Vehicles as an Optimal Control Problem. *IEEE Control System, USA*, 01 October 2015, vol. 35 (5), ISSN 1066-033X, 71-90